# EUROPÄISCHE PATENTANMELDUNG

(11) **EP 4 593 325 A1**
(43) Veröffentlichungstag der Anmeldung: **30.07.2025**
(21) Anmeldenummer: 25153514.2
(22) Anmeldetag: 23.01.2025
(51) Int. Cl.: H04L 9/08

(54) **VORRICHTUNG ZUM GENERIEREN VON MINDESTENS EINEM QUANTENSICHEREN SCHLÜSSEL UNTER VERWENDUNG VON TIME-BIN-KODIERUNG UND/ODER POLARISATIONS-KODIERUNG SOWIE VERFAHREN ZUM GENERIEREN VON MINDESTENS EINEM QUANTENSICHEREN SCHLÜSSEL**

(30) Priorität: 23.01.2024 DE 102024101868
(71) Anmelder: Deutsches Zentrum für Luft- und Raumfahrt e.V., 53227 Bonn (DE)
(72) Erfinder: DE MARCO, Innocenzo, 82205 Gliching (DE); PEEV, Eltimir, 81245 München (DE); ORSUCCI, Davide, 85716 Unterschleissheim (DE); MOLL, Florian, 80689 München (DE)
(74) Vertreter: dompatent von Kreisler Selting Werner - Partnerschaft von Patent- und Rechtsanwälten mbB

(57) **Zusammenfassung**

Die Erfindung betrifft eine Vorrichtung zum Generieren von mindestens einem quantensicheren Schlüssel unter Verwendung von Time-Bin-Kodierung und/oder Polarisations-Kodierung, aufweisend mindestens eine Quelle für kohärente elektromagnetische Strahlung, insbesondere eine Laserlichtquelle, mindestens eine Time-Bin-Kodierungs-Einheit, sowie mindestens eine Polarisations-Kodierungs-Einheit, dadurch gekennzeichnet, dass die Time-Bin-Kodierungs-Einheit, sowie die Polarisations-Kodierungs-Einheit hintereinander angeordnet sind und eine oder mehrere Quellen für kohärente elektromagnetische Strahlung als Quanten-Quelle genutzt wird, sodass die von der Quelle für kohärente elektromagnetische Strahlung emittierten Übertragungsquanten zur Generierung eines quantensicheren Schlüssels
a. polarisiert-kodiert sind,
b. und/oder Time-Bin-kodiert sind

## Beschreibung

Die Erfindung betrifft eine Vorrichtung zum Generieren von mindestens einem quantensicheren Schlüssel unter Verwendung von Time-Bin-Kodierung und/oder Polarisations-Kodierung sowie ein Verfahren zum Generieren von mindestens einem quantensicheren Schlüssel.

Aus dem Stand der Technik ist es bekannt, dass quantensichere Schlüsselübertragung eine entscheidende Technologie im Bereich der Datensicherheit geworden ist. Mit dem Aufkommen von Quantencomputern wird erwartet, dass die aktuellen kryptographischen Protokolle nicht mehr sicher sein werden. Daher sind neue Lösungen notwendig, um die Sicherheit der Datenkommunikation zu gewährleisten. In diesem Zusammenhang stellt die satellitengestützte Quantenschlüsselverteilung eine Möglichkeit dar, quantensichere Schlüssel über größere Distanzen zu übertragen.

Jedoch werden unterschiedliche Protokolle in unterschiedlichen Implementierungen zur Generierung der quantensicheren Schlüssel verwendet. So wird beispielsweise für terrestrische Anwendungen via optischer Faser häufig die sogenannte Time-Bin-Kodierung genutzt, wohingegen zur Kommunikation zwischen Satelliten und mit Satelliten oft die so genannte Polarisations-Kodierung genutzt wird. Deshalb könnte es durch unterschiedliche Akteure zu einer Fragmentierung des Quantennetzes kommen, welche eines universellen Senders bedarf, der eine Vielzahl von Quantenverschlüsselungsprotokollen und Implementierungen unterstützt.

Unter Quantenverschlüsselungsprotokollen versteht man beispielsweise Verfahren, welche Eigenschaften der Quantenmechanik nutzen, um zwischen zwei voneinander getrennten Parteien einen Schlüssel (Zufallszahl) zu erzeugen.

Unter unterschiedlichen Implementierungen versteht man technische Systeme, welche mittels unterschiedlicher physikalischer Parameter das Quantenverschlüsselungsprotokoll umsetzen. So sind beispielsweise Polarisations-Kodierung und Time-Bin-Kodierung unterschiedliche Implementierungsmethoden eines Qubits, da die eine Methode Ihre Quanten durch Polarisation kodiert und die andere Methode in durch Verschiebung der Zeit und Phase/Frequenz, was unterschiedliche physikalische Komponenten und Aufbauten zur Folge hat.

Es gab mehrere Versuche, Mehrprotokoll-Quantenschlüsselverteilungs-Schemata zu entwickeln, um mit unterschiedlicher Empfangshardware zu kommunizieren. Insbesondere wurden einige faseroptische Systeme vorgeschlagen, die in der Lage sind, Informationen in verschiedenen Quantenverschlüsselungsprotokollen zu kodieren. Es gibt jedoch kein Gerät, das gleichzeitig unterschiedliche Implementierungen umsetzen kann. Dies ist insbesondere für die Interoperabilität der Satelliten- und terrestrischen Kommunikation notwendig.

Aufgabe der Erfindung ist, eine Vorrichtung zum Generieren von mindestens einem quantensicheren Schlüssel bereitzustellen, die eine Vereinheitlichung der Satelliten- und terrestrischen Kommunikation ermöglicht.

Die Lösung der Aufgabe erfolgt erfindungsgemäß durch die Ansprüche 1 und 10.

Die erfindungsgemäße Vorrichtung zum Generieren von mindestens einem quantensicheren Schlüssel weist mindestens eine Quelle für kohärente elektromagnetische Strahlung auf, eine Time-Bin-Kodierungs-Einheit und eine Polarisations-Kodierungs-Einheit, wobei diese drei Komponenten hintereinander angeordnet sind.

Eine erfindungsgemäße Quelle für kohärente elektromagnetische Strahlung kann beispielsweise eine Einzelphotonenquelle, wie beispielsweise Quanten-Punkte, oder eine Lichtquelle, wie ein Lasersein. Insbesondere kann die Quelle für kohärente elektromagnetische Strahlung in der Lage sein, einzelne Übertragungsquanten in Form von Photonen oder Elektronen zu erzeugen und auszusenden.

Eine erfindungsgemäße Time-Bin-Kodierungs-Einheit weist mindestens einen Eingang für Übertragungsquanten, einen Puls-Modulator, mindestens zwei Intensitätsmodulatoren, sowie einen Ausgang für kodierte Übertragungsquanten auf. Ein erfindungsgemäßer Puls-Modulator könnte beispielsweise einen akusto-optischen Modulator oder einen elektro-optischen Modulator, oder einen elektroabsorptions Modulator, ein optisch verstärkender Halbleiter, oder einen Flüssigkristall (LCD) Modulator, oder einen elektrooptische oder ein elektro-absorptions Modulator enthalten.

Eine erfindungsgemäße Time-Bin-Kodierungs-Einheit, ist in der Lage, ein Qubit auf ein Übertragungsquant zu kodieren.

In einer bevorzugten Quantenverschlüsselungsprotokoll Implementierung der Time-Bin-Kodierungs-Einheit geschieht dies folgendermaßen:
a. Ein Übertragungsquant wird so kodiert, dass es zu zwei unterschiedlichen Zeitpunkten beim Empfänger ankommen kann. Die unterschiedlichen Zeitpunkte werden durch unterschiedliche Übertragungsquantenpulse moduliert. Ein früher ankommendes Übertragungsquant könnte sodann einer |0> und ein später ankommendes Übertragungsquant einer |1> oder umgekehrt entsprechen. Auf diese Art kodierte Übertragungsquanten sind auf Zeitbasis kodiert.
b. Zusätzlich weist eine erfindungsgemäße Time-Bin-Kodierungs-Einheit einen Phasenschieber auf, welcher in der Lage ist, die Phase des Übertragungsquants zu verschieben. Unterschiedliche Phasenzustände werden genutzt, um |0> oder |1> Zustände zu kodieren. Auf diese Art kodierte Übertragungsquanten sind auf Phasenbasis kodiert.
c. Die Time-Bin-Kodierungs-Einheit kann nun zufällig entscheiden, in welcher Basis jedes einzelne Übertragungsquant kodiert wird.
d. Der Empfänger misst zufällig die empfangenen Übertragungsquanten in der Zeit oder Phasenbasis.
e. Im Anschluss veröffentlicht der Sender einen Teil der gesendeten Daten und die Art der Kodierung auf einem öffentlichen Kommunikationskanal.
f. Der Empfänger prüft, ob in den Fällen, in denen die Sende- und Empfangs-Basis identisch waren, die gleichen Zustände der Übertragungsquanten gemessen wurden, wie der Sender sie gesendet hat.
g. Ist dies der Fall, können sich Sender und Empfänger sicher sein, dass niemand anders Ihre Übertragung mitgehört hat und ein quantensicherer Schlüssel kann auf Basis der Übertragungsquanten erstellt werden.
h. Ist dies nicht der Fall, ist die Wahrscheinlichkeit hoch, dass Ihre Übertragung abgehört wurde, da das "no cloning theorem" besagt, dass es nicht möglich ist, ein System zu bauen, das jedes beliebige Qubit/ Übertragungsquantum perfekt auf ein anderes Qubit/ Übertragungsquantum kopiert, ohne dabei das ursprüngliche zu verändern.

Eine erfindungsgemäße Polarisations-Kodierungs-Einheit weist mindestens einen Eingang für Übertragungsquanten, einen Polarisierer, oder eine Anordnung von Polarisierern auf, zum Beispiel in Form von einer oder mehr Lambda-halbe/ Lambda-viertel Platten, einen Zirkulator, einen Polarisations-Strahlteiler, eine polarisationserhaltende Faser mit einem Phasen Modulator, sowie einen Ausgang für kodierte Übertragungsquanten auf.

In einer bevorzugten Ausführungsform weist die Polarisations-Kodierungs-Einheit mindestens einen Eingang für Übertragungsquanten, entweder einen POGNAC Modulator, wie an der Universität von Padova entwickelt, oder eine Sagnac-Schleife, oder ein Mach-Zehnder Interferometer auf, sowie einen Ausgang für kodierte Übertragungsquanten.

Eine erfindungsgemäße Polarisations-Kodierungs-Einheit, ist in der Lage, ein Qubit auf ein Übertragungsquant zu kodieren.

In einer bevorzugten Quantenverschlüsselungsprotokoll Implementierung der Polarisations-Kodierungs-Einheit geschieht dies folgendermaßen:
i. Ein Übertragungsquant wird durch die Polarisations-Kodierungs-Einheit geschickt.
j. Die Polarisations-Kodierungs-Einheit kann ein Übertragungsquant in zwei unterschiedlichen Basen kodieren:
   i. + (Plus) Basis: in dieser Kodierung könnte ein horizontal polarisiertes Übertragungsquant einer 0 entsprechen und ein vertikal polarisiertes Übertragungsquant könnte einer 1 entsprechen, oder umgekehrt.
   ii. X-Basis: in dieser Kodierung könnte ein von links unten nach rechts oben diagonal polarisiertes Übertragungsquant einer 0 entsprechen und ein von links oben nach rechts unten diagonal polarisiertes Übertragungsquant könnte einer 1 entsprechen, oder umgekehrt.
   iii. Andere Basen sind selbstverständlich auch denkbar. Zum Beispiel kann auch:
      1. horizontal und links zirkular polarisiert
      2. Horizontal und rechts zirkular polarisiert
      3. Vertikal und links zirkular polarisiert
      4. Vertikal und zirkular rechts polarisiert
k. Die Polarisations-Kodierungs-Einheit kann nun zufällig entscheiden, in welcher Basis jedes einzelne Übertragungsquant kodiert wird.
l. Der Empfänger misst zufällig die empfangenen Übertragungsquanten in der x Basis oder + Basis.
m. Im Anschluss veröffentlicht der Sender einen Teil der gesendeten Daten und die Art der Kodierung auf einem öffentlichen Kommunikationskanal.
n. Der Empfänger prüft, ob in den Fällen, in denen die Sende und Empfangs-Basis identisch waren, die gleichen Übertragungsquanten Zustände gemessen wurde, wie der Sender sie gesendet hat.
o. Ist dies der Fall können sich Sender und Empfänger sicher sein, dass niemand anders Ihre Übertragung mitgehört hat und ein quantensicherer Schlüssel kann auf Basis der Übertragungsquanten erstellt werden.
p. Ist dies nicht der Fall, ist die Wahrscheinlichkeit hoch, dass Ihre Übertragung abgehört wurde, da das "no cloning theorem" besagt, dass es nicht möglich ist, ein System zu bauen, das jedes beliebige Qubit/ Übertragungsquanten perfekt auf ein anderes Qubit/ Übertragungsquanten kopiert, ohne dabei das ursprüngliche zu verändern.

Die erfindungsgemäße Time-Bin-Kodierungs-Einheit, weist ferner die Eigenschaft auf, dass die Quanten, welche durch die Time-Bin-Kodierungseinheit kodiert werden, entweder in einer Time-Bin-Basis oder Phasenmodulations-Basis kodiert werden, wobei jede Basis jeweils eine Repräsentation für ein 0er oder 1er Bit enthält.

Des Weiteren weist die erfindungsgemäße Time-Bin-Kodierungs-Einheit die Eigenschaft auf, dass diese in der Lage ist, Übertragungsquanten-Pulse zu erzeugen und diese zu modulieren, um verschiedene Time-Bin-Kodierungs-Protokolle zu kodieren, indem die elektronischen Ansteuersignale geändert werden. Unterschiedliche Protokolle zur Time-Bin-Kodierung sehen beispielsweise unterschiedliche Zeitunterschiede zwischen den 0er und 1er Zeit-Übertragungsquantenpulsen vor, oder unterschiedlichen Phasen Versätzen. Eine Änderung des Ansteuersignals könnte beispielsweise eine Änderung in der Ansteuerung der akusto-optischen oder elektro-optischen Modulatoren betreffen.

Die erfindungsgemäße Vorrichtung ordnet insbesondere alle Time-Bin-Kodierungs-Einheiten vor allen Polarisations-Kodierungs-Einheiten an. Dies hat den Vorteil, dass der Ausgang der Time-Bin-Kodierungs-Einheiten als Übertragungsquanten Quelle für den Eingang der Polarisations-Kodierungs-Einheit genutzt werden kann. Dies stellt sicher, dass der kodierte Polarisations-Zustand des Übertragungsquants erhalten bleibt, da die Time-Bin-Kodierungs-Einheiten den Polarisations-kodierten Zustand zerstören könnte.

Die erfindungsgemäße Vorrichtung ist insbesondere als Photonic integrated circuit ausgestaltet (PIC). Optional können hierbei alle Zirkulatoren durch Strahlteiler ersetzt werden, um die Produktion der Vorrichtung zu ermöglichen. Dieses kompakte Design macht die Anwendung in Satelliten oder mobilen Geräten besonders vorteilhaft.

Weiterhin ist die erfindungsgemäße Vorrichtung ausgestaltet, um die übertragenen quantensicheren Schlüssel insbesondere ausschließlich Time-Bin--zu kodieren und die Polarisations-Kodierungs-Einheit statisch zu nutzen, um emittierte Übertragungsquanten auf eine bestimmte Art zu polarisieren und so zwischen unterschiedlichen Quantenempfängern zu multiplexen.

Die bestimmte Polarisierung könnte zum Beispiel alle Übertragungsquanten für Empfänger A vertikal polarisieren und alle Übertragungsquanten für Empfänger B horizontal polarisieren. Basierend auf der Polarisierung könnten so Quanten entweder auf den Weg Richtung A oder Richtung B gesendet werden. Optional hätte Empfänger A einen vertikal polarisiert-durchlässigen Filter vor dem Empfänger-Eingang und Empfänger B optional einen horizontal polarisiert-durchlässigen Filter vor dem Empfänger-Eingang. So könnte sichergestellt sein, dass Empfänger A nur vertikal polarisierte Übertragungsquanten empfängt und B ausschließlich horizontal polarisierte Übertragungsquanten empfängt.

Bevorzugt ist weiterhin ist die erfindungsgemäße Vorrichtung ausgestaltet, um die übertragenen quantensicheren Schlüssel insbesondere ausschließlich Polarisations-zu kodieren und die Time-Bin-Kodierungs-Einheit zum Multiplexen zwischen mehreren Empfängern zu nutzen, um zu einem bestimmten Zeitpunkt emittierte Übertragungsquanten an unterschiedliche Empfänger zu übertragen.

Weiterhin ist die Vorrichtung bevorzugt ausgestaltet, um die übertragenen quantensicheren Schlüssel insbesondere ausschließlich Polarisations-zu kodieren und die Time-Bin-Kodierungs-Einheit statisch als Übertragungsquanten-Quelle zu nutzen.

In bevorzugter Ausführungsform weist die erfindungsgemäße Vorrichtung eine Polarisations-Kodierungs-Einheit auf, die die von der Time-Bin-Kodierungs-Einheit kodierten Übertragungsquanten in Polarisations-kodierte Übertragungsquanten umwandelt. Umwandeln bedeutet in diesem Zusammenhang, dass die Übertragungsquanten hierbei nicht zusätzlich Polarisations-kodiert werden, sondern eben ausschließlich polarisationskodiert sind. Dies kann zum Beispiel durch eine Änderung der Steuersignale vollzogen werden

In einer bevorzugten Ausführungsform ist die erfindungsgemäße Vorrichtung so ausgestaltet, dass Sie die Interoperabilität von einem Satellitenknoten zu Bodenstationsknoten mit verschiedenen Quantenempfängern durch unterschiedliche Ansteuerung der Vorrichtung ermöglicht.

Ein bevorzugter erfindungsgemäßer Satellitenknoten ist eine weltraumgestützte Vorrichtung in einem Netzwerk, der für die Kommunikation mit anderen Knoten zuständig ist. Dies ermöglicht die Übertragung von Daten und Informationen über große Entfernungen hinweg und ist eine wesentliche Komponente moderner Kommunikationsnetzwerke. Ein Satellitenknoten kann beispielsweise an Bord von Raumstationen, Raketen, Satelliten oder Raumfähren implementiert sein.

Ein bevorzugter erfindungsgemäßer Bodenstationsknoten ist eine planetargestützte Vorrichtung in einem Netzwerk, der für die Kommunikation mit anderen Knoten zuständig ist. Dies ermöglicht die Übertragung von Daten und Informationen über große Entfernungen hinweg und ist eine wesentliche Komponente moderner Kommunikationsnetzwerke. Ein Bodenstationsknoten ist bevorzugt auf der Erde und/oder anderen Himmelskörpern mit Atmosphären ausgestaltet, welche die Polarisations- und/oder Time-Bin-Kodierung beeinflussen könnten.

Die Erfindung betrifft ferner ein Verfahren zum Generieren von mindestens einem quantensicheren Schlüssel, insbesondere unter Verwendung der erfindungsgemäßen Vorrichtung, mit folgenden Verfahrensschritten:
q. Emittieren mindestens eines Übertragungsquants von der Quelle für kohärente elektromagnetische Strahlung
r. Kodieren des mindestens einen Übertragungsquantums mit der Time-Bin-Kodierungs-Einheit
s. Und/oder Kodieren des mindestens einen Übertragungsquantums mit der Polarisations-Kodierungs-Einheit.

Im Folgenden werden bevorzugte Ausführungsformen der Erfindung anhand von Figuren erläutert.

Es zeigt:

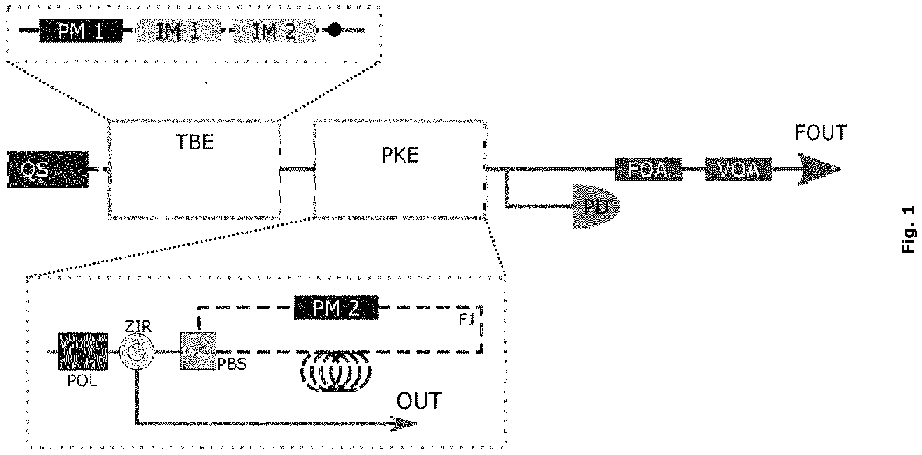

Figur 1: Eine Ausführungsform der erfindungsgemäßen Vorrichtung.

Die Vorrichtung gemäß Figur 1 weist eine Übertragungsquanten-Quelle in Form einer Quelle für kohärente elektromagnetische Strahlung QS auf. Die von der Quelle für kohärente elektromagnetische Strahlung emittierten Übertragungsquanten propagieren in Richtung der Time-Bin-Kodierungs-Einheit TBE, wo sie Time-Bin-kodiert werden. Hierbei passieren Sie einen Phasenmodulator PM 1, so sowie zwei Intensitätsmodulatoren IM 1 und IM 2. IM 1 generiert kurze Übertragungsquantenpulse, welche Informationen tragen, während IM 2 die Intensität der der Übertragungsquantenpulse auf unterschiedliche Intensitäten moduliert, um zum Beispiel "decoy states" falls das betreffenden Protokoll dies vorsieht. Hier wird das erste Mal die Intensität der Quelle für kohärente elektromagnetische Strahlung runtergeregelt. Im Anschluss passieren die optional Time-Bin-kodierten Übertragungsquanten die Time-Bin-Kodierungs-Einheit und propagieren durch den Eingang der Polarisations-Kodierungs-Einheit PKE. In der Polarisations-Kodierungs-Einheit PKE passieren die Übertragungsquanten einen Polarisierer POL, welcher die Übertragungsquanten beispielsweise diagonal polarisiert. Die Polarisierung sollte so gewählt werden, dass eine Messung in einer der beiden Basen eine gleichmäßige Intensitätsverteilung für beispielsweise die +Basis oder die xBasis ergibt.. Danach passieren Sie das erste Mal einen Zirkulator ZIR, welche die Übertragungsquanten zu einem Strahlteiler PBS weiterleitet. Der Strahlteiler sendet die Übertragungsquanten von zwei Seiten in eine polarisationserhaltende optische Faser 1 F1, hier durch eine gestrichelte Line dargestellt, mit einem Phasenmodulator PM 2. Die Übertragungsquanten, die durch die Faser F1 laufen, interferieren nicht miteinander, da sie unterschiedliche Polarisationen haben und nicht ununterscheidbar sind. Nachdem sie jedoch wieder vereint wurden, durchlaufen sie gleichzeitig die Faser, sodass der Quantenzustand eine Überlagerung von H und V mit einem durch PM2 vorgegebenen Phasenunterschied sein wird. Dieser wirkt nur auf eine der Puls-Hälften aufgrund der Verzögerungsleitung in der Schleife, daher der Phasenunterschied. Dies erzeugt effektiv Zustände in den diagonalen und zirkularen Polarisationen. Anschließend passieren die Übertragungsquanten wieder den Zirkulator ZIR und werden zum Ausgang OUT der Polarisations-Kodierungs-Einheit weitergeleitet. Ein Photodetektor PD, der optional in die optische Strecke des Ausgangssignal bewegt werden kann, kann optional zum Überprüfen des kodierten Übertragungsquantenstroms, oder für die Kalibration des Variable Optical Attenuator, oder um das Übertragungsquantensignal nach Anomalien zu untersuchen, genutzt werden. Hinter dem Ausgang OUT propagieren die Zeit- und Polarisations-kodierten Übertragungsquanten durch zwei optische Dämpfer FOA, einem statischen Dämpfen des Übertragungsquantenstroms und einen Variable Optical Attenuator VOA zum dynamischen Dämpfen des Übertragungsquantenstroms, um sicher zu stellen, dass nur ein einzelnes Übertragungsquantum an den Empfänger via FOUT übertragen wird.

Bevorzugt sind alle optischen Strecken, als optische Freistrecken oder optische Faserstrecken ausgestaltet. Gestrichelte optische Strecken in Fig. 1 entsprechen bevorzugt Polarisationsaufrechterhaltende optische Fasern, wobei durchgezogenen Strecken in Fig. 1 bevorzugt single-mode Fasern entsprechen. Eine Faser, kann zum Beispiel als Glasfaser ausgestaltet sein.

## Patentansprüche

1. Vorrichtung zum Generieren von mindestens einem quantensicheren Schlüssel unter Verwendung von Time-Bin-Kodierung und/oder Polarisations-Kodierung, aufweisend mindestens eine Quelle für kohärente elektromagnetische Strahlung, insbesondere eine Laserlichtquelle, mindestens eine Time-Bin-Kodierungs-Einheit, sowie mindestens eine Polarisations-Kodierungs-Einheit, **dadurch gekennzeichnet, dass** die Time-Bin-Kodierungs-Einheit, sowie die Polarisations-Kodierungs-Einheit hintereinander angeordnet sind und eine oder mehrere Quellen für kohärente elektromagnetische Strahlung als Quanten-Quelle genutzt wird, sodass die von der Quelle für kohärente elektromagnetische Strahlung emittierten Übertragungsquanten zur Generierung eines quantensicheren Schlüssels
a. polarisiert-kodiert sind,
b. und/oder Time-Bin-kodiert sind

2. Vorrichtung nach einem der vorherigen Ansprüche, **dadurch gekennzeichnet, dass** die Übertragungsquanten, welche durch die Time-Bin-Kodierungseinheit kodiert werden, entweder in einer Frequenzmodulations-Basis oder Phasenmodulations-Basis kodiert werden, wobei jede Basis jeweils eine Repräsentation für ein Der oder 1er Bit enthält.

3. Vorrichtung nach einem der vorherigen Ansprüche, **dadurch gekennzeichnet, dass** die Übertragungsquanten, welche durch die Polarisations-Kodierungs-Einheit kodiert werden, entweder in einer horizontal/vertikalen linear polarisierten Basis, oder einer diagonal polarisierten Basis kodiert werden, wobei jede Basis jeweils eine Repräsentation für ein Der oder 1er Bit enthält.

4. Vorrichtung nach einem der vorherigen Ansprüche, **dadurch gekennzeichnet, dass** alle Time-Bin-Kodierungs-Einheiten vor allen Polarisations-Kodierungs-Einheiten angeordnet sind.

5. Vorrichtung nach einem der vorherigen Ansprüche, **dadurch gekennzeichnet, dass** die mindestens eine Time-Bin-Kodierungs-Einheit mindestens einen Puls Modulator, sowie mindestens zwei Intensitäts Modulatoren aufweist.

6. Vorrichtung nach einem der vorherigen Ansprüche, **dadurch gekennzeichnet, dass** die mindestens eine Time-Bin-Kodierungs-Einheit in der Lage ist, Übertragungsquantenpulse zu erzeugen und diese zu modulieren, um verschiedene Time-Bin-Kodierungs-Protokolle zu kodieren, indem die elektronischen Ansteuersignale geändert werden.

7. Vorrichtung nach einem der vorherigen Ansprüche **dadurch gekennzeichnet, dass** die mindestens eine Polarisations-Kodierungs-Einheit eine Anordnung von Polarisierer, eine Lambda-halbe Platte, einen Zirkulator, einen Polarisations Strahlteiler, eine polarisationserhaltende Faser mit einem Phasen Modulator aufweist.

8. Vorrichtung nach einem der vorherigen Ansprüche **dadurch gekennzeichnet, dass** die Vorrichtung inklusive aller Komponenten als Photonic Integrated Chip (PIC) gefertigt ist, wobei optional in dieser Fertigungs-Art Zirkulatoren durch Strahlteiler ersetzt werden.

9. Vorrichtung nach einem der vorherigen Ansprüche, **dadurch gekennzeichnet, dass** die übertragenen quantensicheren Schlüssel ausschließlich Time-Bin-kodiert sind und die Polarisations-Kodierungs-Einheit statisch genutzt wird, um emittierte Übertragungsquanten auf eine bestimmte Art zu polarisieren und so zwischen unterschiedlichen Quantenempfängern zu multiplexen.

10. Vorrichtung nach einem der vorherigen Ansprüche, **dadurch gekennzeichnet, dass** die Polarisations-Kodierungs-Einheit die die von der Time-Bin-Kodierungs-Einheit kodierten Übertragungsquanten in Polarisations-kodierte Übertragungsquanten umwandelt.

11. Vorrichtung nach einem der vorherigen Ansprüche, **dadurch gekennzeichnet, dass** diese die Interoperabilität von einem Satellitenknoten zu Bodenstationsknoten mit verschiedenen Quantenempfängern durch unterschiedliche Ansteuerung der Vorrichtung ermög licht.

12. Verfahren zum Generieren von mindestens einem quantensicheren Schlüssel, insbesondere unter Verwendung einer Vorrichtung nach einem der Ansprüche 1-10, mit folgenden Verfahrens Schritten:
a. Emittieren mindestens eines Übertragungsquants von der Quelle für kohärente elektromagnetische Strahlung
b. Kodieren des mindestens einen Übertragungsquantums mit der Time-Bin-Kodierungs-Einheit
c. Und/oder Kodieren des mindestens einen Übertragungsquantums mit der Polarisations-Kodierungs-Einheit.
